# EUROPÄISCHE PATENTANMELDUNG

(11) **EP 4 191 740 A1**
(43) Veröffentlichungstag der Anmeldung: **07.06.2023**
(21) Anmeldenummer: 21211565.3
(22) Anmeldetag: 01.12.2021
(51) Int. Cl.: H01M 10/44, H01M 10/48, H01M 10/61, H02J 7/00

(54) **VERFAHREN ZUM LADEN EINES AKKUMULATORS EINER MOBILEN WERKZEUGMASCHINE SOWIE LADEVORRICHTUNG**

(71) Anmelder: Hilti Aktiengesellschaft, 9494 Schaan (LI)
(72) Erfinder: Landesfeind, Johannes, 82407 Wielenbach (DE); Braun, Philipp, 87600 Kaufbeuren (DE)
(74) Vertreter: Hilti Aktiengesellschaft Corporate Intellectual Property

(57) **Zusammenfassung**

Bei einem Verfahren (1000) zum Laden eines Akkumulators (12) einer mobilen Werkzeugmaschine (10), wobei der Akkumulator (12) einen bei Raumtemperatur flüssigen Elektrolyten (24) aufweist, wird zumindest temporär bei einer Kerntemperatur (TK) von mindestens 60°C und mit einer Laderate von wenigstens 3 C geladen. Des Weiteren betrifft die Erfindung eine Ladevorrichtung (100). Die Erfindung ermöglicht ein besonders schnelles Laden des Akkumulators (12).

## Beschreibung

Die Erfindung betrifft ein Verfahren zum Laden eines Akkumulators einer mobilen Werkzeugmaschine.

Werden Handwerkzeugmaschinen auf einer Baustelle eingesetzt, so sollten diese möglichst unterbrechungsfrei nutzbar sein. Bei kabellos betreibbaren Handwerkzeugmaschinen, insbesondere wenn sie einen Akkumulator als Energiespeicher aufweisen, ergibt sich jedoch regelmäßig die Notwendigkeit, den Akkumulator wieder aufzuladen. Somit kommt es zu Unterbrechungen der Arbeiten mit den Handwerkzeugmaschinen während deren Akkumulatoren aufgeladen werden müssen. Alternativ besteht die Möglichkeit, mehrere Akkumulatoren als Wechselakkumulatoren zu verwenden. Dies ist jedoch mit hohen Anschaffungskosten verbunden.

Aufgabe der vorliegenden Erfindung ist es daher, ein Verfahren zum Laden eines Akkumulators einer mobilen Werkzeugmaschine anzubieten, mit dem der Akkumulator der Handwerkzeugmaschine besonders rasch aufladbar ist. Des Weiteren soll eine Ladevorrichtung vorgestellt werden, die ein besonders schnelles Laden eines Akkumulators einer mobilen Werkzeugmaschine ermöglicht.

Gelöst wird die Aufgabe zunächst durch ein Verfahren zum Laden eines Akkumulators einer mobilen Werkzeugmaschine, wobei der Akkumulator einen bei Raumtemperatur flüssigen Elektrolyten aufweist und zumindest temporär bei einer Kerntemperatur von mindestens 60 °C mit einer Laderate von wenigstens 3 C geladen wird.

Unter einer Laderate xC kann dabei die Stromstärke verstanden werden, die benötigt wird, um einen entladenen Akkumulator in einem dem Zahlwert x der Laderate x C entsprechenden Bruchteil einer Stunde vollständig aufzuladen. Eine Laderate von 3 C ermöglicht somit ein vollständiges Aufladen des Akkumulators binnen 20 Minuten.

Der Erfindung liegt als ein Gedanke zugrunde, dass die Viskosität des flüssigen Elektrolyten mit steigender Temperatur, insbesondere steigender Kerntemperatur, des Akkumulators und damit auch des Elektrolyten abnehmen kann. Insbesondere können bei Temperaturen von mindestens 60 °C besonders günstige Viskositäten erreicht werden. Durch Senkung der Viskosität kann wiederum ein Innenwiderstand des Akkumulators gesenkt werden. Hierdurch lassen sich höhere Ladeströme und / oder geringere Verlustleistungen erzielen.

Ein weiterer Gedanke ist, dass ein als "Lithium-plating" bekannter Effekt bei einer derartigen Kerntemperatur im Vergleich zu geringeren Kerntemperaturen reduziert oder vermieden werden kann.

Die mobile Werkzeugmaschine kann eine Handwerkzeugmaschine sein und / oder umfassen. Alternativ oder ergänzend kann die mobile Werkzeugmaschine auch als Bauroboter ausgebildet sein. Insbesondere kann sie zum Einsatz auf einer Baustelle, beispielsweise einer Hochbau-Baustelle und / oder einer Tiefbau-Baustelle ausgebildet sein. Sie kann zum Bohren, Trennen, beispielsweise Sägen oder Schneiden, Pressen und / oder Schleifen ausgebildet sein.

Die Raumtemperatur kann zum Beispiel einer Temperatur in einem Bereich von 19°C bis 23 °C entsprechen. Insbesondere kann die Raumtemperatur beispielsweise 21 °C entsprechen.

Der Elektrolyt kann eine Viskosität von wenigstens 0,1 mPa s aufweisen. Er kann eine Viskosität von höchstens 10 mPa s aufweisen. Der Elektrolyt kann eine Transferenzzahl für Lithium-Transport zwischen 0,3 und 0,7 bei Raumtemperatur und 1 bar Atmosphärendruck aufweisen. Er kann einen Diffusionskoeffizient bei Raumtemperatur und 1 bar Atmosphärendruck für den Lithium-Transport zwischen 3×10⁻⁶ cm2/s und 20×10⁻⁶ cm2/s aufweisen.

Insbesondere kann der Elektrolyt ca. 1-molares LiPF6 in einem Gemisch von Ethylencarbonat und Dimethylcarbonat aufweisen. Das Gemisch kann ein Gewichtsanteilsverhältnis von 3 : 7 aufweisen.

Um eine Überhitzung des Akkumulators zu vermeiden, kann vorgesehen sein, dass wenn die Kerntemperatur eine Grenztemperatur erreicht oder überschreitet, die Laderate reduziert und / oder der Ladevorgang unterbrochen wird. Die Grenztemperatur kann beispielsweise zwischen 70 °C und 95 °C, insbesondere 80 °C, betragen. Die Laderate kann auf 1 C oder weniger reduziert werden. Beispielsweise kann sie auf höchstens 0,5 C reduziert werden. Die Reduktion der Laderate beziehungsweise die Unterbrechung des Ladevorgangs, kann für eine bestimmte Zeitdauer erfolgen.

Der Akkumulator kann Lithium-basiert sein. Alternativ oder ergänzend kann er auch Natriumbasiert sein. Denkbar ist auch, dass der Akkumulator Magnesium-basiert ist. Der Akkumulator kann eine Nennspannung von wenigstens 20 V, insbesondere von wenigstens 28 V, beispielsweise 36 V, aufweisen.

Der Akkumulator kann wenigstens eine Pouchzelle umfassen. Er kann somit als Quader oder zumindest im Wesentlichen als Quader ausgebildet sein. Alternativ oder ergänzend kann der Akkumulator auch eine zylindrische Form aufweisen.

Der Akkumulator kann auch röhrenförmig ausgebildet sein.

Der Akkumulator kann wenigstens eine Einzelzelle aufweisen. Die Einzelzelle und / oder der Akkumulator können wenigstens ein Gehäuse aufweisen. Mithin kann der Akkumulator als Akkumulator-Pack, insbesondere mehrerer Einzelzellen aufweisend, ausgebildet sein.

Zur Erhöhung der Lebensdauer kann vorgesehen sein, dass das Laden in Abhängigkeit eines Betriebszustandes des Akkumulators erfolgt. Der Betriebszustand kann einem Gesundheitszustand des Akkumulators entsprechen. Beispielsweise kann er dem Verhältnis des Innenwiderstandes zu einem anfänglichen Wert des Innenwiderstands des Akkumulators entsprechen. Alternativ oder ergänzend kann der Betriebszustand auch einer Temperatur, insbesondere einer anderen als der Kerntemperatur, entsprechen. Denkbar ist auch, dass der Betriebszustand eine Zeitreihe, insbesondere über die Nutzung des Akkumulators, beispielsweise in den jeweils vergangenen 30 Minuten vor Beginn des Ladens, umfasst.

Denkbar ist insbesondere, dass das Laden bei der Kerntemperatur von mindestens 60 °C in Abhängigkeit von einem Ladezustand des Akkumulators erfolgt. Beispielsweise kann das Laden mit wenigstens 3 C bei einem Ladezustand von wenigstens 20 % und / oder höchstens 80 %, beispielsweise zwischen 30 % und 60 %, erfolgen. Denkbar ist auch einen bestimmten Anteil der Gesamtkapazität des Akkumulators mit der jeweiligen Laderate zu laden. Beispielsweise kann vorgesehen sein, dass 50 % der Kapazität des Akkumulators mit wenigstens 3 C bei über 60 °C geladen werden.

Dabei ist denkbar, dass die Kerntemperatur gemessen wird. Dazu kann ein Temperatursensor in und / oder am Akkumulator angeordnet sein. Denkbar ist auch, dass eine Ladevorrichtung einen Temperatursensor aufweist. Vorzugsweise kann der Temperatursensor eingerichtet sein, die Kerntemperatur zu messen. Der Temperatursensor kann derart an der Ladevorrichtung angeordnet sein, dass er den Akkumulator berührt und / oder in diesen eindringt, sobald dieser in einer Ladebucht der Ladevorrichtung angeordnet ist.

Alternativ oder ergänzend ist auch denkbar, dass die Kerntemperatur geschätzt wird. Die Schätzung der Kerntemperatur kann dabei auf einer Messung einer anderen Temperatur, beispielsweise einer Oberflächentemperatur des Akkumulators, beruhen. Alternativ oder ergänzend kann die Schätzung auch anhand von elektrischen Parametern, beispielsweise einem Ladestrom und / oder einer Ladespannung, des Akkumulators und / oder des Ladenvorganges erfolgen.

Wird eine derartige Schätzung der Kerntemperatur durchgeführt, so kann das Verfahren angewendet werden, ohne dass vorher eine besondere Vorbereitung des Akkumulators erforderlich ist. Insbesondere kann darauf verzichtet werden, einen Temperatursensor in den Akkumulator einzubauen, um die Kerntemperatur zu messen.

Weiter ist denkbar, dass zumindest zeitweise während des Ladens ein Wärmewiderstand des Akkumulators erhöht und / oder reduziert wird. Beispielsweise ist denkbar, dass der Akkumulator zum Laden in einen wärmeisolierten Bereich eingebracht wird. Beispielsweise kann dies ein Bereich mit wärmeisolierten Wänden sein. Dazu kann die Ladebucht der Ladevorrichtung wärmeisolierter Wände aufweisen. Somit kann ein effektiver Wärmewiderstand des Akkumulators erhöht werden. Während des Ladens im Akkumulator vorhandene und / oder entstehende Wärme kann somit besser im Akkumulator gehalten werden. Der Akkumulator kann sich somit schneller auf die gewünschte Kerntemperatur von wenigstens 60 °C aufwärmen und / oder seine Kerntemperatur halten. Alternativ oder ergänzend ist auch denkbar, dass der Akkumulator zeitweise einem Fluidstrom, insbesondere einem Luftstrom, ausgesetzt wird. Beispielsweise kann ein Lüfter zeitweise eingeschaltet oder ausgeschaltet werden. Der Lüfter kann eingerichtet sein, einen Luftstrom auf den Akkumulator zu fördern. Dadurch kann insbesondere der effektive Wärmewiderstand reduziert werden, wenn der Lüfter eingeschaltet wird. Dies kann beispielsweise genutzt werden, wenn die Kerntemperatur die Grenztemperatur erreicht oder überschreitet. Ein weiterer Anstieg der Kerntemperatur kann somit gebremst oder gestoppt werden oder die Kerntemperatur kann reduziert werden.

In den Rahmen der Erfindung fällt des Weiteren eine **Ladevorrichtung** zum Laden eines Akkumulators einer mobilen Werkzeugmaschine, wobei die Ladevorrichtung eingerichtet ist, eine Kerntemperatur des Akkumulators zu erfassen. Somit kann die Ladevorrichtung die Kerntemperatur des Akkumulators erfassen, um damit insbesondere in der vorangehenden beschriebenen Weise einen Ladevorgang des Akkumulators zu steuern. Die Ladevorrichtung kann in die mobile Werkzeugmaschine integriert sein. Alternativ kann die Ladevorrichtung auch als eigenständiges Gerät ausgebildet sein. Insbesondere kann sie unabhängig von der mobilen Werkzeugmaschine ausgebildet sein.

Dazu kann die Ladevorrichtung einen Temperatursensor und / oder eine Schnittstelle für einen Temperatursensor zur Messung einer Temperatur des Akkumulators aufweisen. Der Temperatursensor kann ein Oberflächentemperatursensor zur Messung einer Oberflächentemperatur des Akkumulators sein. Alternativ oder ergänzend kann der Temperatursensor auch zur direkten Messung der Kerntemperatur eingerichtet sein.

Beispielsweise kann dazu der Temperatursensor in einen Kern des Akkumulators einführbar sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine mobile Werkzeugmaschine;
- Fig. 2: ein Blockschaltbild einer Ladevorrichtung mit einem Akkumulator und
- Fig. 3: ein Flussdiagramm eines Verfahrens zum Laden eines Akkumulators.

In der nachfolgenden Beschreibung der Figuren werden zur Erleichterung des Verständnisses der Erfindung für gleiche oder sich funktional entsprechende Elemente jeweils die gleichen Bezugszeichen verwendet.

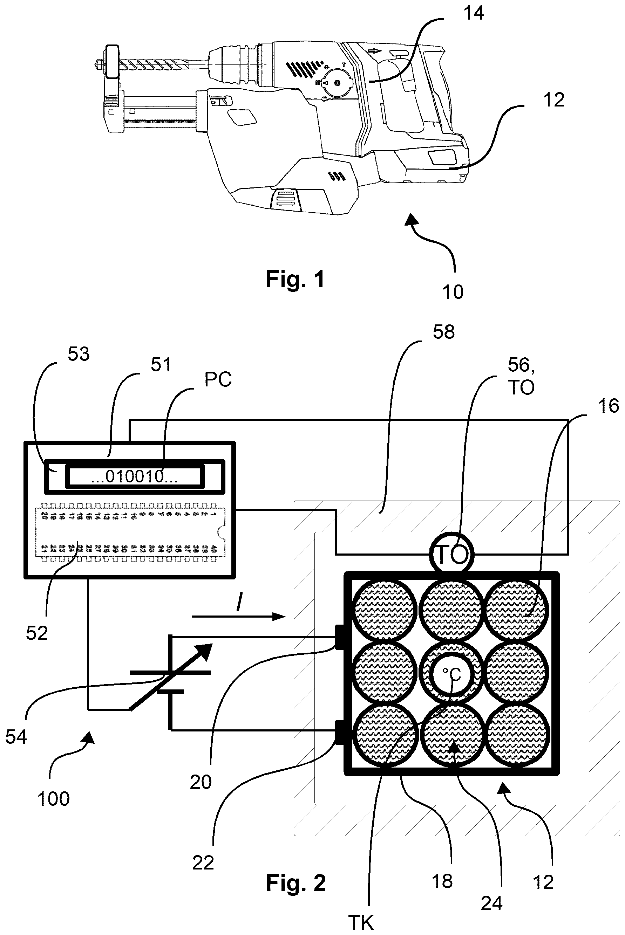

**Fig. 1** zeigt eine mobile Werkzeugmaschine 10. Die mobile Werkzeugmaschine 10 ist beispielsweise eine elektropneumatische Hammerbohrmaschine. Die mobile Werkzeugmaschine 10 ist kabellos betreibbar. Dazu weist sie einen Akkumulator 12 auf. Der Akkumulator 12 ist abnehmbar an einem Gehäuse 14 der mobilen Werkzeugmaschine 10 angeordnet. Er lässt sich somit, beispielsweise zum Laden, von der mobilen Werkzeugmaschine 10 abnehmen. Anschließend kann er wieder an der mobilen Werkzeugmaschine 10 angeordnet werden, sodass mit der mobilen Werkzeugmaschine 10 weitergearbeitet werden kann.

**Fig. 2** nun in einer schematischen Darstellung eine Ladevorrichtung 100. Die Ladevorrichtung 100 ist eingerichtet, den Akkumulator 12 zu laden. Dieser ist in Fig. 2 in einer schematischen Querschnittsansicht dargestellt.

Der Akkumulator 12 weist eine Vielzahl von Einzelzellen **16** auf, von denen in Fig. 2 beispielhaft lediglich eine Einzelzelle 16 mit einem Bezugszeichen versehen ist. Die Einzelzellen 16 sind in ein Akkumulatorgehäuse **18** integriert. Beispielhaft sind die Einzelzellen 16 zylinderförmig. Alternativ ist auch denkbar, dass die Einzelzellen 16 quaderförmig oder zumindest im Wesentlichen quaderförmig ausgebildet sind. Beispielsweise können sie auch als Pouchzellen ausgebildet sein. Sie können innerhalb des Akkumulators 12 aufeinandergestapelt angeordnet sein.

Am Akkumulatorgehäuse 18 befinden sich zwei Elektroden **20, 22.** Über die Elektroden 20, 22 kann der Akkumulator 12 mit einem Ladestrom I aufgeladen werden. Der Akkumulator 12 kann eine Nennspannung von beispielsweise 36 V aufweisen.

Ebenso kann grundsätzlich über die Elektroden 20, 22 Strom dem Akkumulator 12 entnommen werden.

Jede Einzelzelle 16 des Akkumulators 12 weist einen Elektrolyten **24** auf, der in Fig. 2 in Form eines Füllmusters im Inneren der Einzelzellen 16 des Akkumulators 12 schematisch dargestellt ist und wobei in Fig. 2 beispielhaft lediglich eines der Füllmuster mit dem zugehörigen Bezugszeichen versehen ist. Es versteht sich, dass die Einzelzellen 16 in ihrem Inneren noch weitere Komponenten, insbesondere Lithium-haltiges Material, aufweisen. Diese jedoch sind aus Darstellungsgründen in Fig. 2 nicht dargestellt.

Der Akkumulator 12 und insbesondere jede der Einzelzellen 16 des Akkumulators 12 ist Lithiumionen-basiert.

Im Kern jeder Einzelzelle 16 herrscht eine Kerntemperatur TK. Beispielhaft ist dazu in Fig. 2 anhand einer der Einzelzellen 16 die Kerntemperatur TK markiert.

Der Elektrolyt 24 ist bei einer Raumtemperatur von beispielsweise 21 °C und einem Atmosphärendruck von 1 bar flüssig. Beispielsweise kann es sich um 1-molares LiPF6 in einem Gemisch von Ethylencarbonat und Dimethylcarbonat aufweisen. Das Gemisch kann ein Gewichtsanteilsverhältnis von 3 : 7 aufweisen. Bei Erwärmung, insbesondere über 60 °C, kann sich die Viskosität des Elektrolyten 24 reduzieren.

Die Ladevorrichtung 100 ist in diesem Ausführungsbeispiel als eigenständiges Gerät ausgebildet. Alternativ ist auch denkbar, dass die Ladevorrichtung 100 beispielsweise in die mobile Werkzeugmaschine 10 (Fig. 1) integriert ist.

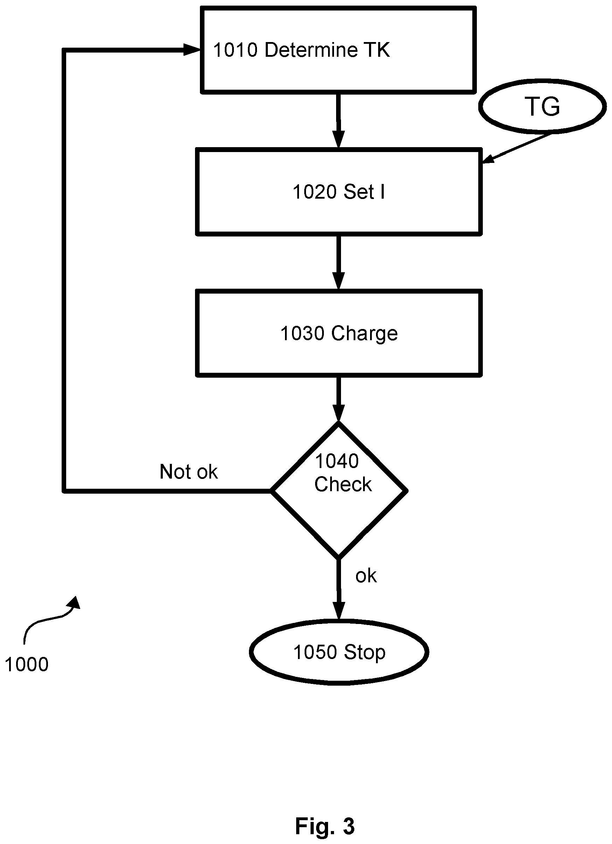

Die Ladevorrichtung 100 weist einen Mikrocontroller **51** auf. Der Mikrocontroller 51 umfasst einen Mikroprozessor **52,** eine Speichereinheit **53** sowie Programmcode **PC,** der in der Speichereinheit 53 ausführbar abgelegt ist. Der Programmcode PC ist derart ausgebildet, dass der Mikrocontroller 51 insgesamt eingerichtet ist, mittels der Ladevorrichtung 100 und entsprechend dem vorangehend und mit Bezug auf Fig. 3 nachfolgend näher erläuterten Verfahren den Akkumulator 12 aufzuladen.

Weiter weist die Ladevorrichtung 100 eine regelbare Spannungsquelle **54** auf. Die regelbare Spannungsquelle 54 ist über die Elektroden 20, 22 an den Akkumulator 12 elektrisch verbunden. Sie ist zur eingerichtet, Gleichspannung bereitzustellen.

Somit kann der Akkumulator 12 über die regelbare Spannungsquelle 54 aufgeladen werden.

Des Weiteren weist die Ladevorrichtung 100 einen Temperatursensor 56 auf. Der Temperatursensor 56 ist an dem Akkumulatorgehäuse 18 des Akkumulators 12 angeordnet. Er ist somit eingerichtet, eine Oberflächentemperatur TO des Akkumulators 12 zu erfassen. Er ist ferner datentechnisch mit dem Mikrocontroller 51 verbunden, so dass dieser Temperaturmesswerte des Temperatursensors 56 auslesen kann.

Auch weist die Ladevorrichtung 100 ein Wärmeschutzgehäuse 58 auf. Das Wärmeschutzgehäuse 58 bildet eine Aufnahme für den aufzuladenden Akkumulator 12. Seine Wandung ist aus einem aus einem wärmedämmenden, insbesondere Brand geschützten, Material ausgebildet. Es kann beispielsweise ein Fasermaterial und / oder ein Schaummaterial, beispielsweise auf Basis von Polyurethan, aufweisen. Das Material kann mit einem Flammschutzmittel versehen sein.

**Fig. 3** zeigt nun ein Verfahren **1000** zum Laden eines Akkumulators einer mobilen Werkzeugmaschine. Nachfolgend wird das Verfahren 1000 näher erläutert. Dazu wird auf die in Fig. 1 und 2 eingeführten Bezugszeichen Bezug genommen.

Bei einer Messung **1010** wird mittels des Temperatursensors 54 die Oberflächentemperatur TO des Akkumulators 12 gemessen. Aus der Oberflächentemperatur TO wird mithilfe eines im Programmcode PC codifizierten Wärmemodells des Akkumulators 12 die Kerntemperatur TK durch den Microcontroller 51 geschätzt. Dabei kann sich die geschätzte Kerntemperatur TK beispielsweise auf die höchste Kerntemperatur TK aller Einzelzellen 16 beziehen.

In Abhängigkeit von der geschätzten Kerntemperatur TK erfolgt anschließend eine Einstellung **1020** des Ladestrom I des Akkumulators 12. Dabei wird der Ladestrom I im Falle, dass sich die geschätzte Kerntemperatur TK im Bereich von unter 60 °C bewegt, entsprechend einer Laderate von 1,5 C eingestellt. In einem Temperaturbereich von 60 °C bis 75 °C wird der Ladestrom I entsprechend einer Laderate von 5C eingestellt. Im Falle, dass die geschätzte Kerntemperatur TK sich in einem Bereich zwischen 75 °C und einer Grenztemperatur **TG**, beispielsweise 80 °C, bewegt, wird der Ladestrom I entsprechend einer Laderate von 1 C eingestellt. Ist die geschätzte Kerntemperatur TK höher als die Grenztemperatur TG, also in diesem Ausführungsbeispiel höher als 80 °C, so wird der Ladestrom I entsprechend einer Laderate von 0,1 C reduziert.

Bei einer anschließenden Aufladung **1030** wird mit dem eingestellten Ladestrom I der Akkumulator 12 über die regelbare Spannungsquelle 56, beispielsweise über eine Zeitdauer von 1 Sekunde hinweg, aufgeladen. Eine Entscheidung **1040** prüft dann den Ladezustand des Akkumulators 12. Überschreitet der Ladezustand einen gewünschten Zielladezustand, beispielsweise 98 % der Gesamtkapazität des Akkumulators 12, so wird der Ladestrom I abgeschaltet und das Verfahren kommt zu einem Verfahrensende **1050.** Anderenfalls wird das Verfahren mit einer erneuten Messung 1010 wieder weitergeführt.

Bei Varianten des Verfahrens 1000 kann anstelle eines Ladens mit zumindest zeitabschnittsweise konstanten Ladestrom I auch ein komplexerer zeitlicher Verlauf des Ladestroms I vorgesehen sein. Beispielsweise kann der Ladestrom I, zumindest zeitweise, gepulst sein. Der Ladestrom I kann ein Gleichstrom sein. Er kann auch, zumindest zeitweise, einem getakteten Gleichstrom entsprechen. Er kann gepulst mit konstanten und / oder variierenden Pulsweiten sein. Die Form wenigstens eines Pulses kann rechteckig oder zumindest im Wesentlichen, d. h. mit Ausnahme von fallenden oder steigenden Flanken sowie gegebenenfalls mit Ausnahme von Rauschen oder sonstigen Störanteilen, rechteckig sein. Die Form wenigstens eines Pulses kann auch nicht-rechteckig, beispielsweise in Form eines Dreieck-Pulses oder in Form einer Sinus-Halbwelle oder zumindest im Wesentlichen in Form eines Dreieck-Pulses oder einer Sinus-Halbwelle, sein.

Zwischen wenigstens einem Puls und einem weiteren Puls kann eine, insbesondere kurzzeitige, Teil-Entladung erfolgen. Dazu kann der Ladestrom I zu einem Entladestrom umgepolt werden.

### Bezugszeichenliste

- 10: Werkzeugmaschine
- 12: Akkumulator
- 14: Gehäuse
- 16: Einzelzellen
- 18: Akkumulatorgehäuse
- 20: Elektrode
- 22: Elektrode
- 24: Elektrolyt
- 51: Mikrocontroller
- 52: Mikroprozessor
- 53: Speichereinheit
- 54: Spannungsquelle
- 56: Temperatursensor
- 58: Wärmeschutzgehäuse
- 100: Ladevorrichtung
- 1000: Verfahren
- 1010: Messung
- 1020: Einstellung
- 1030: Aufladung
- 1040: Entscheidung
- 1050: Verfahrensende
- I: Ladestrom
- PC: Programmcode
- TG: Grenztemperatur
- TK: Kerntemperatur
- TO: Oberflächentemperatur

## Patentansprüche

1. **Verfahren** (1000) zum Laden eines Akkumulators (12) einer mobilen Werkzeugmaschine (10), wobei der Akkumulator (12) einen bei Raumtemperatur flüssigen Elektrolyten (24) aufweist und wobei zumindest temporär bei einer Kerntemperatur (TK) von mindestens 60°C und mit einer Laderate von wenigstens 3 C geladen wird.

2. Verfahren nach dem vorhergehenden Anspruch, **dadurch gekennzeichnet, dass** wenn die Kerntemperatur (TK) eine Grenztemperatur (TG) erreicht oder überschreitet, die Laderate reduziert und / oder der Ladevorgang unterbrochen wird.

3. Verfahren nach einem der vorhergehenden Ansprüche, **dadurch gekennzeichnet, dass** der Akkumulator (12) Lithium-basiert ist.

4. Verfahren nach einem der vorhergehenden Ansprüche, **dadurch gekennzeichnet, dass** der Akkumulator (12) wenigstens eine Pouchzelle umfasst.

5. Verfahren nach einem der vorhergehenden Ansprüche, **dadurch gekennzeichnet, dass** das Laden in Abhängigkeit eines Betriebszustandes des Akkumulators (12) erfolgt.

6. Verfahren nach einem der vorhergehenden Ansprüche, **dadurch gekennzeichnet, dass** das Laden bei der Kerntemperatur (TK) von mindestens 60°C in Abhängigkeit von einem Ladezustand des Akkumulators (12) erfolgt.

7. Verfahren nach einem der vorhergehenden Ansprüche, **dadurch gekennzeichnet, dass** die Kerntemperatur gemessen wird.

8. Verfahren nach einem der vorhergehenden Ansprüche, **dadurch gekennzeichnet, dass** die Kerntemperatur (TK) geschätzt wird.

9. Verfahren nach einem der vorhergehenden Ansprüche, **dadurch gekennzeichnet, dass** zumindest zeitweise während des Ladens ein effektiver Wärmewiderstand des Akkumulators (12) erhöht und / oder reduziert wird.

10. **Ladevorrichtung (100)** zum Laden eines Akkumulators (12) einer mobilen Werkzeugmaschine (10), **dadurch gekennzeichnet**, das die Ladevorrichtung (100) eingerichtet ist, eine Kerntemperatur (TK) des Akkumulators (12) zu erfassen.

11. Ladevorrichtung nach dem vorhergehenden Anspruch, **dadurch gekennzeichnet, dass** die Ladevorrichtung (100) einen Temperatursensor (56) und / oder eine Schnittstelle für einen Temperatursensor (56) zur Messung einer Temperatur des Akkumulators (12) aufweist.

12. Ladevorrichtung nach einem der beiden vorhergehenden Ansprüche, **dadurch gekennzeichnet, dass** die Ladevorrichtung (100) eingerichtet ist, einen Akkumulator (12) für eine mobile Werkzeugmaschine (10) nach dem Verfahren (1000) nach einem der Ansprüche 1 bis 7 zu laden.
